# EUROPEAN PATENT APPLICATION

(11) **EP 2 579 139 A1**
(43) Date of publication of application: **10.04.2013**
(21) Application number: 11789633.2
(22) Date of filing: 13.05.2011
(51) Int. Cl.: G06F 3/048

(54) **TERMINAL, PROCESS SELECTION METHOD, CONTROL PROGRAM, AND RECORDING MEDIUM**

(30) Priority: 01.06.2010 JP 2010125946
(71) Applicant: NEC Corporation, Tokyo 108-8001 (JP)
(72) Inventor: SHIMIZU, Kazuto, Tokyo 108-8001 (JP)
(74) Representative: Vossius & Partner
(86) International application number: PCT/JP2011/061590
(87) International publication number: WO 2011/152224

(57) **Abstract**

An object of the present invention is to provide a terminal in which a predetermined process performed to an item can be selected even when a user does not correctly drop the item in the desired region.

A terminal 10 according to the present invention includes a process table 60 in which a predetermined process content is registered, display means 20 in which the item is displayed, input means 30 which detects a drag-and-drop operation to the item, operation determination means 40 which determines whether or not a predetermined operation is included in the drag-and-drop operation when the drag-and-drop operation is detected, and process selection means 50 which selects the predetermined process content from the process table 60 when it is determined that the predetermined operation is included and selects a drag-and-drop process when it is determined that the predetermined operation is not included.

## Description

### Technical field

The present invention relates to a terminal in which a desired process to an item is selected, a process selection method, a control program, and a recording medium.

### Background art

Generally, when an item displayed in a display is moved to a desired position, the item to be moved is designated by using a mouse or the like and a drag-and-drop operation, a double-click operation, or any other operation is performed.

As a technology to move the item to the desired position, a technology in which a drag distance and a drag time are associated with movement information in advance and the item is moved to a predetermined position according to the drag performed by the user (the distance and the time) is disclosed in patent document 1. Further, a technology in which the item can be easily moved to the desired position outside a display screen by changing a display content according to the drag is disclosed in patent document 2.

On the other hand, a technology in which by dragging and dropping the item that is a target to be processed on the icon to which a series of process contents are set by the user, a series of processes are performed to the item is disclosed in patent document 3.

### Prior art document

### Patent document

patent document 1: Japanese Patent Application Laid-Open No. 2009-151638
patent document 2: Japanese Patent Application Laid-Open No. 1997-258952
patent document 3: Japanese Patent Application Laid-Open No. 2007-304669

### Brief summary of the invention

### Problems to be solved by the invention

The technology described in patent documents 1 and 2 is a technology for moving the item to the desired position, so any process cannot be performed to the item by using the technology. On the other hand, by using the technology described in patent document 3, the desired process can be performed to the item. However, it is required to drop the item on the icon. Accordingly, when the user is not familiar with the use of a mouse, a touch panel, or the like or a display area is small, it is difficult for the user to correctly drop the item on the desired icon.

The present invention is made in view of the above problem. The object of the present invention is to provide a terminal in which the user can select the desired process to be performed to the item even when the user does not correctly drop the item in the desired region, a process selection method, a control program, and a recording medium.

### Means for solving the problems

In order to achieve the above-mentioned object, a terminal according to the present invention includes a process table in which a predetermined process content is registered, display means in which an item is displayed, input means which detects a drag-and-drop operation to the item, operation determination means which determines whether or not a predetermined operation is included in the drag-and-drop operation when the drag-and-drop operation is detected, and process selection means which selects the predetermined process content from the process table when it is determined that the predetermined operation is included and select a drag-and-drop process to the item when it is determined that the predetermined operation is not included.

In order to achieve the above-mentioned object, a process selection method according to the present invention which uses a terminal including display means and a process table in which a predetermined process content is registered includes the steps of: displaying an item in the display means, detecting a drag-and-drop operation to the item, determining whether or not a predetermined operation is included in the drag-and-drop operation when the drag-and-drop operation is detected, and selecting the predetermined process content from the process table when it is determined that the predetermined operation is included and a process of moving the item to a drop position when it is determined that the predetermined operation is not included.

In order to achieve the above-mentioned object, a control program according to the present invention which can be executed by a computer of a terminal including display means and a process table in which a predetermined process content is registered causes the computer to perform: a function to display an item in the display means, a function to detect a drag-and-drop operation to the item, a function to determine whether or not a predetermined operation is included in the drag-and-drop operation when the drag-and-drop operation is detected, and a function to select the predetermined process content from the process table when it is determined that the predetermined operation is included and a process of moving the item to a drop position when it is determined that the predetermined operation is not included.

In order to achieve the above-mentioned object, a recording medium according to the present invention is a computer-readable recording medium recording a control program which causes a computer of a terminal including display means and a process table in which a predetermined process content is registered to execute: a procedure for displaying an item in the display means, a procedure for detecting a drag-and-drop operation to the item, a procedure for determining whether or not a predetermined operation is included in the drag-and-drop operation when the drag-and-drop operation is detected, and a procedure for selecting the predetermined process content from the process table when it is determined that the predetermined operation is included and a process of moving the item to a drop position when it is determined that the predetermined operation is not included.

### Effect of the invention

By using the above-mentioned configuration, the terminal in which the user can select the desired process to be performed to the item even when the user does not correctly drop the touched item in the desired region, the process selection method, the control program, and the recording medium can be provided.

### Brief description of the drawings

Fig. 1 is an example of a block diagram of a terminal 10 according to the first exemplary embodiment of the present invention.
Fig. 2 is an example of an operation flow chart of a terminal 10 according to the first exemplary embodiment of the present invention.
Fig. 3 is an example of an external view of a terminal 100 according to the second exemplary embodiment of the present invention.
Fig. 4 is an example of a block diagram of a terminal 100 according to the second exemplary embodiment of the present invention.
Fig. 5 is an example of an operation flow chart of a terminal 100 according to the second exemplary embodiment of the present invention.
Fig. 6 is an example of a process table 110 according to the second exemplary embodiment of the present invention.
Fig. 7 is an example of an external view of a terminal 300 according to the third exemplary embodiment of the present invention.
Fig. 8 is an example of a block diagram of a terminal 300 according to the third exemplary embodiment of the present invention.
Fig. 9 is an example of an operation flow chart of a terminal 300 according to the third exemplary embodiment of the present invention.
Fig. 10 is an example of a process table 313 according to the third exemplary embodiment of the present invention.
Fig. 11 is an example of an external view of a terminal 500 according to the fourth exemplary embodiment of the present invention.
Fig. 12 is an example of a block diagram of a terminal 500 according to the fourth exemplary embodiment of the present invention.
Fig. 13 is an example of a process table 512 according to the fourth exemplary embodiment of the present invention.

### Mode for carrying out the invention

### (First exemplary embodiment)

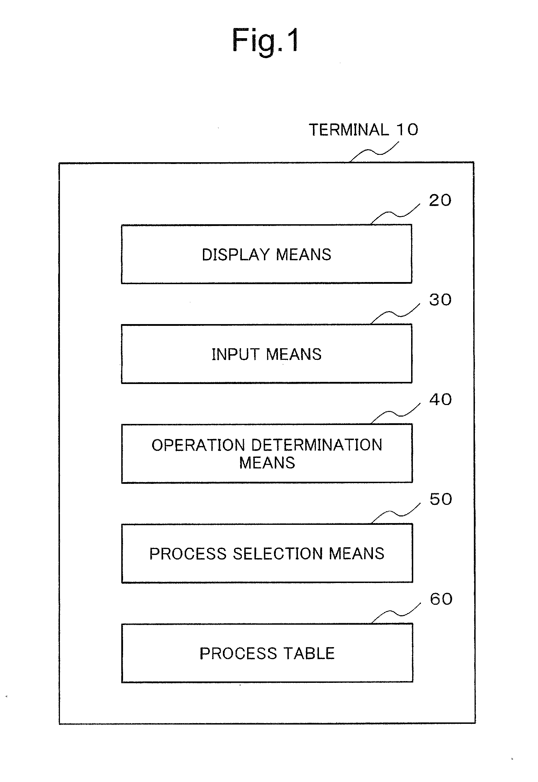

A first exemplary embodiment of the present invention will be described. Fig. 1 shows an example of a block configuration diagram of a terminal 10 according to the exemplary embodiment. In Fig. 1, the terminal 10 includes display means 20, input means 30, operation determination means 40, process selection means 50, and a process table 60.

The display means 20 displays items such as an application, an icon, a file, and the like. The input means 30 detects a drag-and-drop operation to the item. The operation determination means 40 determines whether or not a predetermined operation is included in the detected drag-and-drop operation. Here, the predetermined operation includes an operation of dropping the item in a state in which a dragging speed is greater than a predetermined threshold value, an operation of dropping the item after dragging the item in a predetermined direction, or the like.

The process selection means 50 selects a predetermined process content from the process table 60 when it is determined that the predetermined operation is included in the drag-and-drop operation. On the other hand, the process selection means 50 selects a usual drag-and-drop process when it is determined that the predetermined operation is not included in the drag-and-drop operation. Namely, the process selection means 50 selects a process of moving the item to a drop position. The predetermined process content is registered in the process table 60. Here, the predetermined process content includes a process of controlling an execution state of the item, a process of controlling a storage state of the item, and the like. In particular, the process of controlling the execution state of the item includes a process of activating the item, a process of ending the item, a process of restarting the item, a process of changing the execution priority, and the like. In particular, the process of controlling the storage state of the item includes a process of deleting the item, a process of reproducing the item, a process of registering the item to a list, a process of setting an evaluation value, and the like.

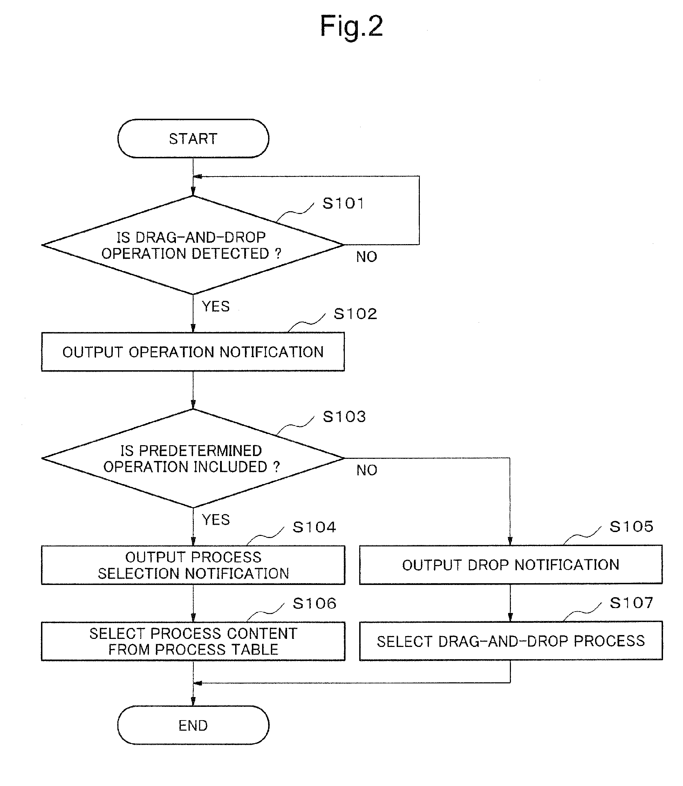

Fig. 2 shows an example of the flow of the operation of the terminal 10. In Fig. 2, the input means 30 monitors whether or not the user performs the drag-and-drop operation to the item displayed in the display means 20 (S101). When the input means 30 detects that the user performs the drag-and-drop operation ("Yes" in step S101), the input means 30 outputs an operation notification to the operation determination means 40 (S102).

When the operation determination means 40 receives the operation notification, the operation determination means 40 determines whether or not the predetermined operation is included in the detected drag-and-drop operation (S103). When the operation determination means 40 determines that the predetermined operation is included in the drag-and-drop operation ("Yes" in step S103), the operation determination means 40 outputs a process selection notification to the process selection means 50 (S104). On the other hand, when the operation determination means 40 determines that the predetermined operation is not included in the drag-and-drop operation ("No" in step S103), the operation determination means 40 outputs a drop notification to the process selection means 50 (S105).

When the process selection means 50 receives the process selection notification, the process selection means 50 selects the predetermined process content corresponding to the drag-and-drop operation performed by the user from the process table 60 (S106). On the other hand, when the process selection means 50 receives the drop notification, the process selection means 50 selects the usual drag-and-drop process based on the drag-and-drop operation performed by the user (S107).

The terminal 10 according to the exemplary embodiment determines whether or not the predetermined operation is included in the detected drag-and-drop operation when the drag-and-drop operation is detected. When the terminal 10 determines that the predetermined operation is included in the drag-and-drop operation, the terminal 10 selects the predetermined process content registered in the process table 60. Therefore, the user can perform the predetermined process to the item even when the user does not correctly drop the item in the desired region.

### (Second exemplary embodiment)

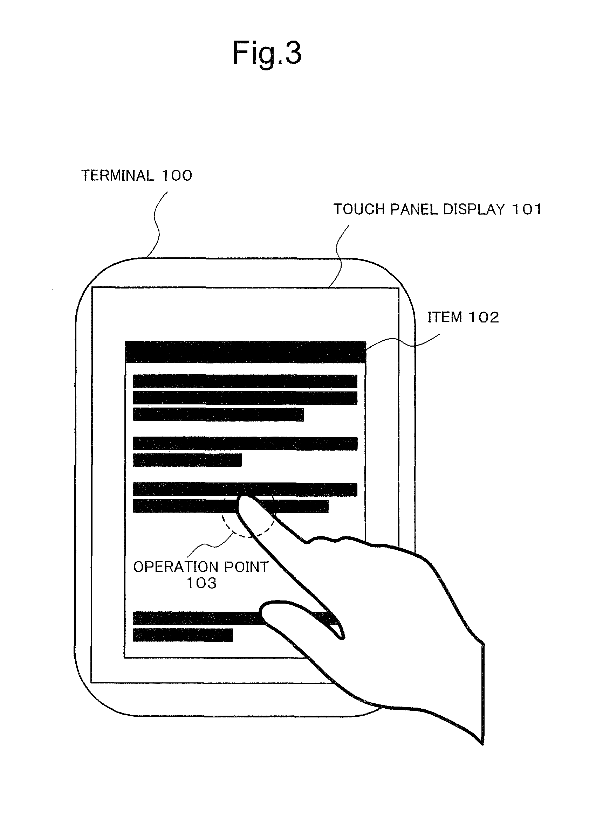

A second exemplary embodiment of the present invention will be described. An example of the exterior appearance of the terminal according to the exemplary embodiment is shown in Fig. 3. In Fig. 3, an item 102 and the like are displayed on a touch panel display 101 of a terminal 100. Here, an application, an icon, a file, or the like can be applied as the item 102. In this exemplary embodiment, the application is applied as the item 102. When the user performs the desired process to the item 102, the user touches an arbitrary position of the item 102 and drags and drops the item 102.

Here, for convenience, the point on the touch panel display 101 that is touched by the user is referred to as an operation point 103. When the user touches the surface of the touch panel display 101, the operation point 103 appears on the surface of the touch panel display 101. The operation point 103 is moved by changing (dragging) the touch position and disappears when the touch is ended (when the drop is performed). Further, the operation point 103 displayed on the touch panel display 101 is moved when the user performs the drag. However, the item 102 is not necessarily moved when the user performs the drag.

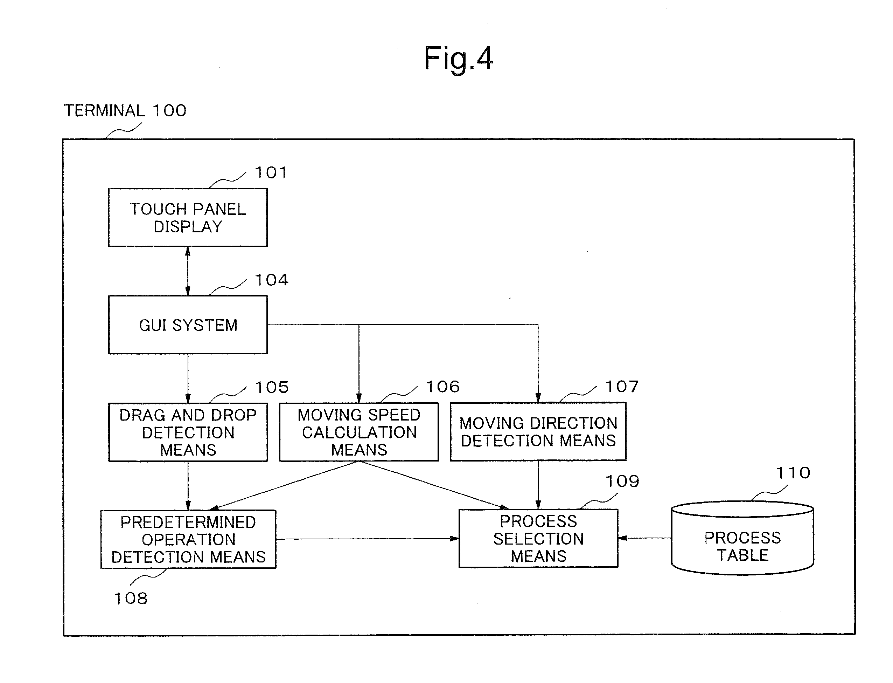

Next, the configuration of the terminal 100 according to the exemplary embodiment will be described. An example of a block configuration diagram of the terminal 100 is shown in Fig. 4. In Fig. 4. the terminal 100 includes the touch panel display 101, a GUI (Graphical User Interface) system 104, drag and drop detection means 105, moving speed calculation means 106, moving direction detection means 107, predetermined operation detection means 108, process selection means 109, and the process table 110.

The touch panel display 101 is a general touch panel display having a display function to a display and an input function using a touch panel. Here, the touch panel display 101 includes the function of display means described in Claims.

The GUI system 104 is a system of a general graphical user interface which provides graphical input/output means to the user. In the exemplary embodiment, the GUI system 104 acquires information about a position on the touch panel display 101 that is touched by the user as position information and outputs the acquired position information to the drag and drop detection means 105, the moving speed calculation means 106, and the moving direction detection means 107.

The drag and drop detection means 105 determines whether or not the drag-and-drop operation is performed based on the position information received from the GUI system 104. In the exemplary embodiment, when the drag is performed over a distance more than a predetermined distance while touching the item 102 and the item 102 is dropped, the drag and drop detection means 105 determines that the drag-and-drop operation has been performed. When the drag and drop detection means 105 detects the drag-and-drop operation, the drag and drop detection means 105 outputs the operation notification to the predetermined operation detection means 108.

Here, the input means described in Claims corresponds to the touch panel display 101, the GUI system 104, and the drag and drop detection means 105. Further, in the exemplary embodiment, a case in which the touch panel display 101 is used as the input means is described as an example. However, a mouse, a trackball, or the like can be used as the input means. In this case, the pressing down of the mouse button corresponds to the start of the touch and the release of the mouse button corresponds to the end of the touch (the drop).

The moving speed calculation means 106 calculates a moving speed of the operation point 103 by using the position information received from the GUI system 104 at a time just before the user drops the item 102 and notifies the predetermined operation detection means 108 and the process selection means 109 of the calculated moving speed. Further, the moving speed is not limited to the moving speed of the operation point 103 at a time just before the drop. For example, the moving speed of the operation point 103 at a time just after the start of the touch, an average moving speed during the drag, or the like can be used as the moving speed.

The moving direction detection means 107 detects the moving direction of the operation point 103 by using the position information received from the GUI system 104 at a time just before the user drops the item 102 and notifies the process selection means 109 of the detected moving direction. Further, the moving direction is not limited to the moving direction of the operation point 103 at a time just before the drop. For example, the moving direction of the operation point 103 at a time just after the start of the touch, a direction along a line connecting the touch start position and the drop position, or the like can be used as the moving direction.

The predetermined operation detection means 108 holds a predetermined threshold value and determines whether or not the predetermined operation is included in the drag-and-drop operation. In the exemplary embodiment, when the predetermined operation detection means 108 receives the operation notification from the drag and drop detection means 105, the predetermined operation detection means 108 compares the moving speed received from the moving speed calculation means 106 with the threshold value. When the received moving speed is greater than the threshold value, the predetermined operation detection means 108 determines that the predetermined operation is included in the drag-and-drop operation and outputs the process selection notification to the process selection means 109. When the moving speed is smaller than the threshold value, the predetermined operation detection means 108 determines that the predetermined operation is not included in the drag-and-drop operation and outputs the drop notification to the process selection means 109. Here, the predetermined operation detection means 108 corresponds to operation determination means described in Claims.

The process selection means 109 selects the usual drag-and-drop process when the process selection means 109 receives the drop notification from the predetermined operation detection means 108. On the other hand, the process selection means 109 selects the process content corresponding to the moving speed received from the moving speed calculation means 106 and the moving direction received from the moving direction detection means 107 from the process table 110 when receiving the process selection notification.

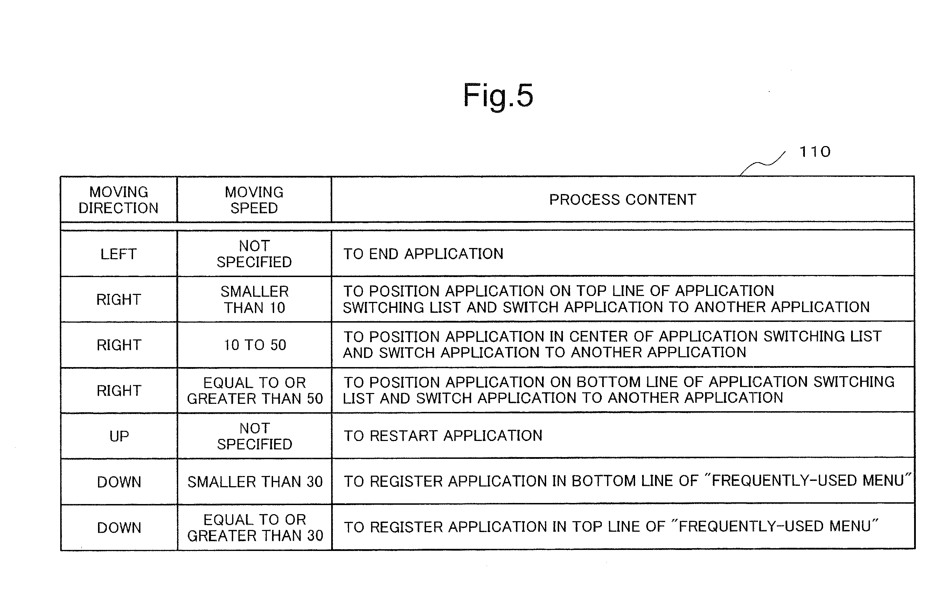

A plurality of process contents associated with the moving direction and the moving speed arc registered in the process table 110. An example of the process table 110 according to the exemplary embodiment is shown in Fig. 5. For example, when the moving direction is "down" and the moving speed is "smaller than 30", the process content described as "to register application in bottom line of frequently-used menu" is selected. Here, as shown in the process table 110 shown in Fig. 5, when the moving direction is "down", the application is registered on the top line or the bottom line of the frequently-used menu whether the moving speed in equal to or greater than 30 on smaller than 30. Namely, when the numerical value proportional to the moving speed is registered as an order of "the frequently-used menu", each application can be arranged according to the desired order in accordance with the moving speed at a time just before the drop. Further, the content of the process table 110 is not limited to the content shown in Fig. 5. For example, the process content can be associated with either the moving direction or a dragging speed.

Further, in particular, although not shown in Fig. 5, the moving speed used for the selection is greater than the threshold value used when the predetermined operation detection means 108 determines whether or not the predetermined operation is included in the drag-and-drop operation (when the moving speed is smaller than the threshold value, the usual drag-and-drop process is selected). For example, when the threshold value held by the predetermined operation detection means 108 is equal to or greater than "30", the process content described as "to register application in bottom line of frequently-used menu" in Fig. 5 will never be selected.

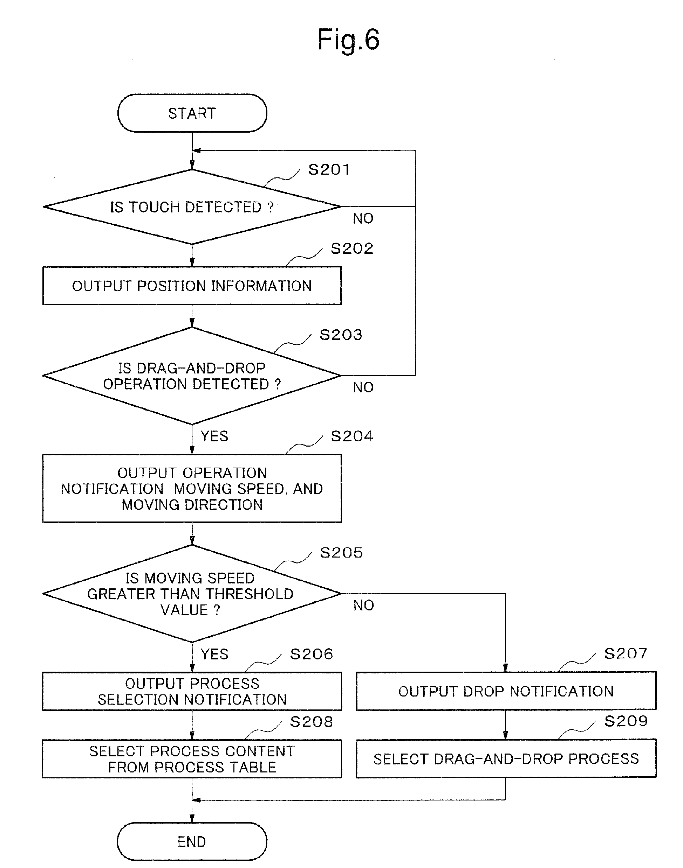

Next, the operation of the terminal 100 according to the exemplary embodiment will be described by using Fig. 6. In Fig. 6, the touch panel display 101 monitors whether or not the user touches the surface of the touch screen (S201). When the touch panel display 101 detects that the user touches the surface of the touch screen ("Yes" in S201), the GUI system 104 acquires information about a position touched by the user (position information on the operation point 103). When the acquired position information is included in the display region of the item 102. the position information is outputted to the drag and drop detection means 105, the moving speed calculation means 106, and the moving direction detection means 107 (S202).

The drag and drop detection means 105 determines whether or not the drag-and-drop operation is performed by using the position information received from the GUI system 104 (S203). When the drag and drop detection means 105 determines that the drag-and-drop operation is performed ("Yes" in S203), the drag and drop detection means 105 outputs the operation notification to the predetermined operation detection means 108. The moving speed calculation means 106 calculates the moving speed of the operation point 103 at a time just before the drop by using the position information received from the GUI system 104 and outputs a calculation result to the predetermined operation detection means 108 and the process selection means 109. The moving direction detection means 107 detects the moving direction of the operation point 103 at a time just before the drop by using the position information received from the GUI system 104 and outputs a detection result to the process selection means 109 (S204).

When the predetermined operation detection means 108 receives the operation notification, the predetermined operation detection means 108 determines whether or not the received moving speed is greater than the threshold value that is held (S205). When the moving speed is greater than the threshold value ("Yes" in S205), the predetermined operation detection means 108 outputs the process selection notification to the process selection means 109 (S206). On the other hand, when the moving speed is smaller than the threshold value ("No" in S205), the predetermined operation detection means 108 outputs the drop notification to the process selection means 109 (S207).

When the process selection means 109 receives the process selection notification, the process selection means 109 selects the process content corresponding to the moving speed and the moving direction from the process table 110 (S208). On the other hand, when the process selection means 109 receives the drop notification, the process selection means 109 selects the usual drag-and-drop process based on the moving speed and the moving direction (S209).

Further, in S208, when the process content corresponding to the moving speed and the moving direction is not registered in the process table 110, an error message is displayed on the touch panel display 101. Further, a setting in which the usual drag-and-drop process is selected can be made instead of displaying the error message.

As described above, the terminal 100 according to the exemplary embodiment does not determine the process according to the region in which the item 102 is dropped and selects the process content corresponding to the moving speed and the moving direction of the operation point 103 at a time just before the item 102 is dropped from the process table 110. Therefore, the user can easily perform the predetermined process even when the user does not correctly drop the item 102 in the desired region.

Additionally, in the exemplary embodiment, it is not necessary to display the candidate process contents on the touch panel display 101. Therefore, even when the process content cannot be suitably displayed for the reason that the display region is small or the like, the user can easily select the desired process from among a large number of process contents.

### (Third exemplary embodiment)

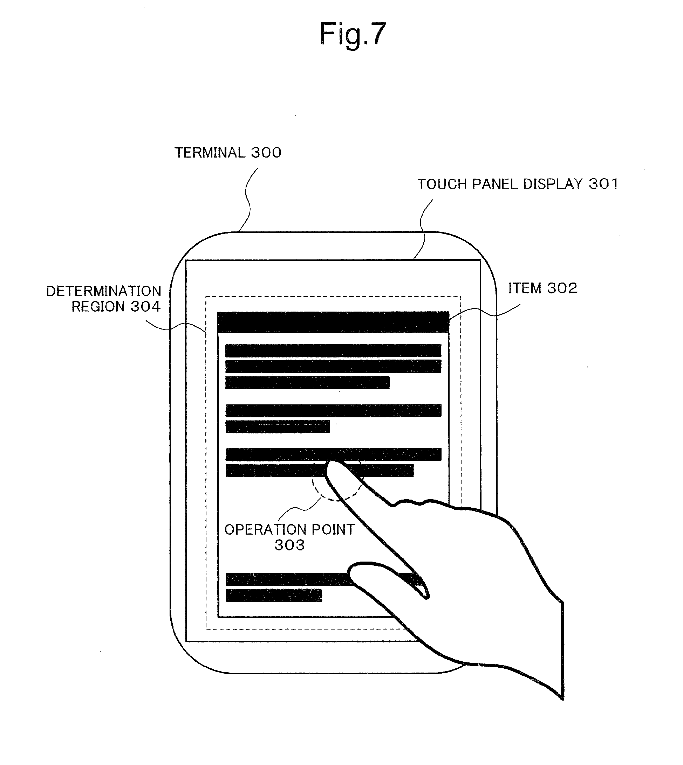

A third exemplary embodiment according to the present invention will be described. An example of an external view of the terminal according to the exemplary embodiment is shown in Fig. 7. In Fig. 7, a terminal 300 according to the exemplary embodiment displays an item 302 in a determination region 304 of a touch panel display 301. An operation point 303 shown in Fig. 7 is a position on the touch panel display 301 that is touched by the user. Further, a mouse, a trackball, or the like can be used as the input means instead of the touch panel display 301.

When the user performs the predetermined process to the item 302, the user drags the item 302 to a region outside the determination region 304. Further, a boundary of the determination region 304 may not be displayed on the touch panel display 301. Furthermore, the determination region 304 according to the exemplary embodiment is a region fixed in advance. However, it is not limited to this. For example, an operation in which when the operation point 303 appears, the boundary in which the operation point 303 exists is displayed and when the operation is ended, no boundary is displayed can be used. The size of the determination region 304 can be determined independently of the size of the touch panel display 301 and the size of the item 302.

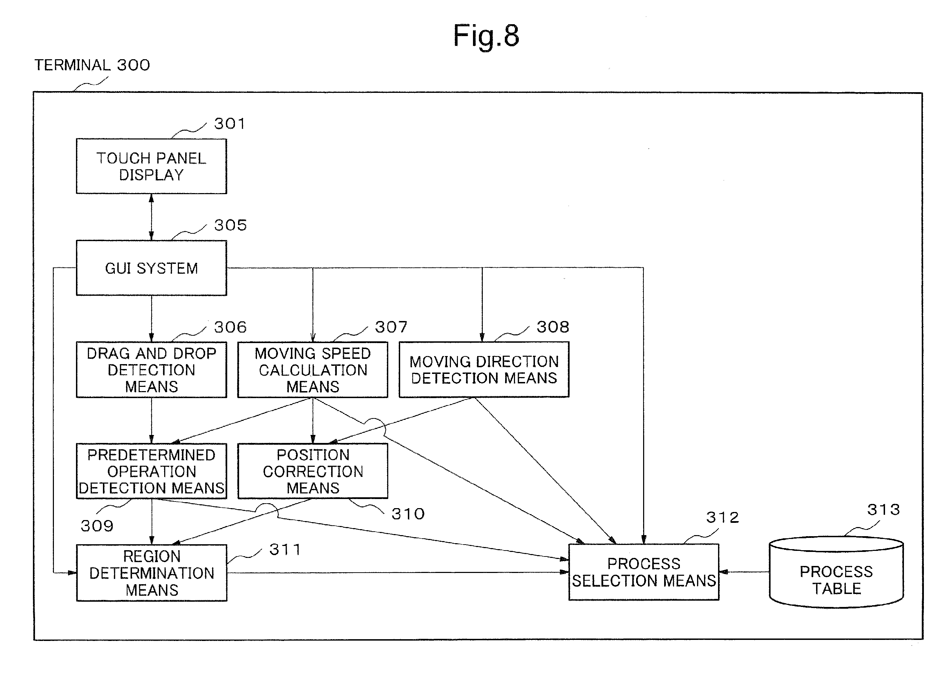

Next, the configuration of the terminal 300 according to the exemplary embodiment will be described. An example of a block configuration diagram of the terminal 300 is shown in Fig. 8. In Fig. 8, the terminal 300 includes the touch panel display 301, a GUI system 305, drag and drop detection means 306, moving speed calculation means 307, moving direction detection means 308, predetermined operation detection means 309, position correction means 310, region determination means 311, process selection means 312, and the process table 313.

The touch panel display 301, the drag and drop detection means 306, the moving speed calculation means 307, the moving direction detection means 308, and the predetermined operation detection means 309 used for the third exemplary embodiment are almost similar to those means used for the second exemplary embodiment described in Fig. 4. Therefore, the detailed description will be omitted. Further, in this exemplary embodiment, the moving speed calculation means 307 and the moving direction detection means 308 output the calculated moving speed and the detected moving direction to the position correction means 310, respectively. When the moving speed is greater than the threshold value, the predetermined operation detection means 309 outputs a region determination instruction notification to the region determination means 311 instead of outputting the process selection notification.

The GUI system 305 acquires the position information on the operation point 303 and outputs it to the drag and drop detection means 306, the moving speed calculation means 307, the moving direction detection means 308, and the region determination means 311. Further, the GUI system 305 according to the exemplary embodiment discriminates a kind of the item 302 touched by the user and outputs the discriminated kind of the item to the process selection means 312. Here, the GUI system 305 discriminates the kind of the item, such as an application, a music file, an image file, or the like.

The operation point 303 moves with inertia when the item 302 is dropped. Therefore, the position correction means 310 calculates an inertial moving distance and an inertial moving direction based on the moving speed at a time just before the drop that is received from the moving speed calculation means 307 and the moving direction at a time just before the drop that is received from the moving direction detection means 308. A general calculation method that uses a predetermined dynamic friction coefficient can be used for this calculation. It is desirable that the dynamic friction coefficient is determined so that the moving distance generated by the inertia of the drag-and-drop operation that is intuitively felt by the user is approximately equal to the calculated moving distance. Further, the dynamic friction coefficient may be arbitrarily set and changed by the user.

The region determination means 311 corrects the position information on the drop position received from the GUI system 305 by using the inertial moving distance and the inertial moving direction that are received from the position correction means 310 when receiving the region determination instruction notification. Further, the region determination means 311 determines whether or not the position information on the drop position after the correction exists outside the determination region 304. The region determination means 311 outputs the process selection notification to the process selection means 312 when the corrected position information exists outside the determination region 304 and outputs the drop notification to the process selection means 312 when the corrected position information exists in the determination region 304.

When the process selection means 312 receives the process selection notification, the process selection means 312 selects the process content corresponding to the moving speed received from moving speed calculation means 21, the moving direction received from the moving direction detection means 308, and the kind of the item received from the GUI system 305 from the process table 313. On the other hand, when the process selection means 312 receives the drop notification, the process selection means 312 selects the usual drag-and-drop process.

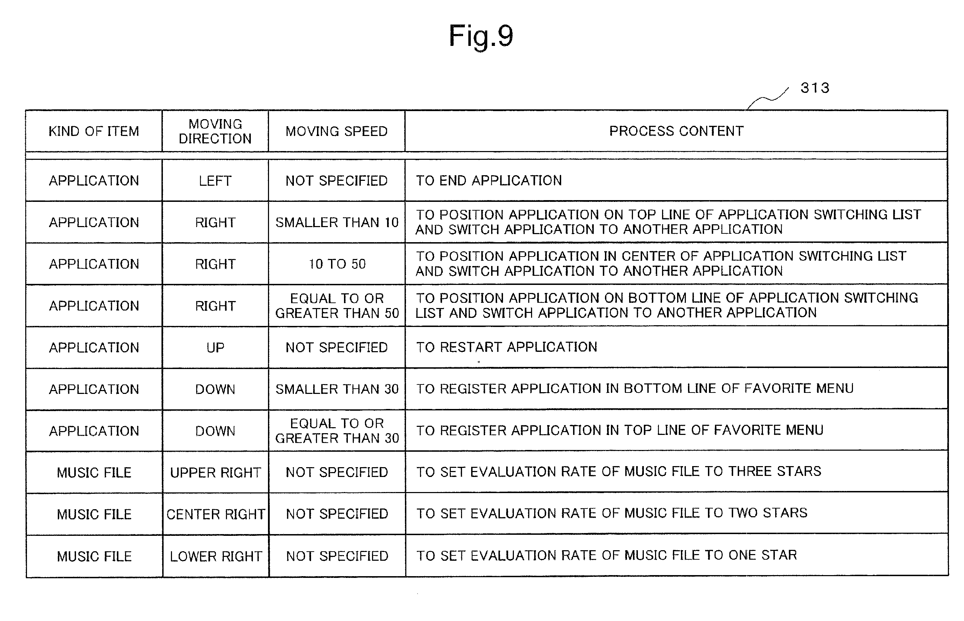

A plurality of process contents associated with the kind of the item, the moving direction, and the moving speed are registered in the process table 313. An example of the process table 313 according to the exemplary embodiment is shown in Fig. 9. In Fig. 9, for example, when the kind of the item is "application", the moving direction is "left", and the moving speed is "not specified", the process content described as "to end application" is selected.

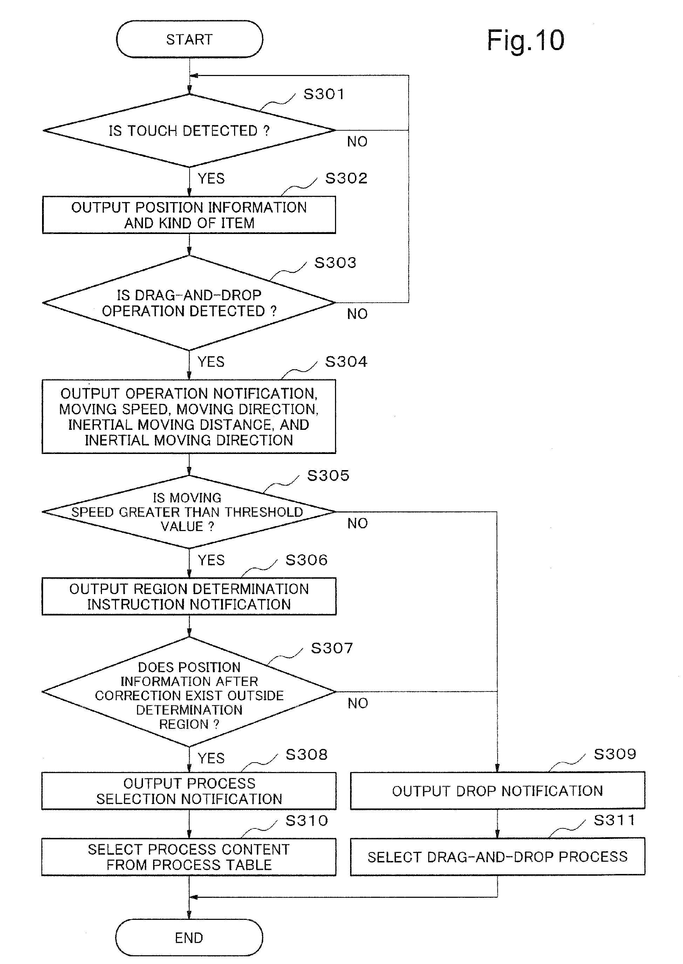

Next, the operation of the terminal 300 according to the exemplary embodiment will be described by using Fig. 10. In Fig. 10, the touch panel display 301 monitors whether or not the user touches the surface of the touch screen (S301). When the touch panel display 301 detects that the user touches the surface of the touch screen ("Yes" in S301), the GUI system 305 acquires the position information on the operation point 303. When the acquired position information is included in the display region of the item 302, the GUI system 305 outputs the position information on the operation point 303 to the drag and drop detection means 306, the moving speed calculation means 307, the moving direction detection means 308, and the region determination means 311. Further, the GUI system 305 discriminates the kind of the item 302 and outputs a discrimination result to the process selection means 312 (S302).

The drag and drop detection means 306 determines whether or not the drag-and-drop operation is performed based on the received position information (S303). When the drag and drop detection means 306 determines that the drag-and-drop operation is performed ("Yes" in S303), the drag and drop detection means 306 outputs the operation notification to the predetermined operation detection means 309.

Further, the moving speed calculation means 307 calculates the moving speed at a time just before the drop and outputs a calculation result to the predetermined operation detection means 309, the position correction means 310, and the process selection means 312. The moving direction detection means 107 detects the moving direction at a time just before the drop and outputs a detection result to the position correction means 310 and the process selection means 109. Further, the position correction means 310 calculates the inertial moving distance and the inertial moving direction based on the received moving speed and moving direction and outputs a calculation result to the region determination means 311 (S304).

When the predetermined operation detection means 309 receives the operation notification, the predetermined operation detection means 309 determines whether or not the received moving speed is greater than the threshold value that is held (S305). When the moving speed is greater than the threshold value ("Yes" in S305), the predetermined operation detection means 309 outputs the region determination instruction notification to the region determination means 311 (S306). On the other hand, when the moving speed is smaller than the threshold value ("No" in S305), the predetermined operation detection means 309 outputs the drop notification to the process selection means 312 (S309).

When the region determination means 311 receives the region determination instruction notification, the region determination means 311 corrects the position information on the drop position received from the GUI system 305 by using the inertial moving distance and the inertial moving direction that are received from the position correction means 310. The region determination means 311 determines whether or not the position information after the correction exists outside the determination region 304 (Step S307). When the position information alter the correction exists outside the determination region 304 ("Yes" in S307), the region determination means 311 outputs the process selection notification to the process selection means 312 (S308). On the other hand, when the position information after the correction exists in the determination region 304 ("No"' in S307), the region determination means 311 outputs the drop notification to the process selection means 312 (S309).

When the process selection means 312 receives the process selection notification, the process selection means 312 selects the process content corresponding to the kind of the item, the moving speed, and the moving direction that are received, from the process table 313 (S310). On the other hand, when the process selection means 312 receives the drop notification, the process selection means 312 selects the usual drag-and-drop process (S311). Further, in the step S310, when the process content corresponding to the kind of the item, the moving speed, and the moving direction is not registered in the process table 313, the error message is displayed on the touch panel display 301. A setting in which the usual drag-and-drop process is selected instead of displaying the error message can be made.

Here, it is possible not to use the position correction means 310 in the exemplary embodiment. In this case, in the step S307, the region determination means 311 does not correct the position information on the drop position received from the GUI system 305 and use the position information without any change in order to determine whether or not the position information exists outside the determination region 304.

As described above, the terminal 300 according to the exemplary embodiment determines whether or not the position information exists outside the determination region 304 and selects the process content from the process table 313 only when the position information exists outside the determination region 304. therefore, when the user does not want to select the process based on the process table 313, the user can certainly select the usual drag-and-drop process.

Further, in the exemplary embodiment, the position information on the drop position is corrected by considering the inertia generated when the item 302 is dropped. Accordingly, the user can select the desired process registered in the process table 313 even when the user does not correctly drag the item 302 to a region outside the determination region 304.

Further, in the exemplary embodiment, the process content is determined by considering the kind of the item. Therefore, various processes can be selected according to a plurality of kinds of items 302.

### (Fourth exemplary embodiment)

A fourth exemplary embodiment of the present invention will be described. A terminal according to the fourth exemplary embodiment is almost the same as the terminal 100 described in the second exemplary embodiment. The terminal according to the fourth exemplary embodiment includes a secondary touch panel display and list management means. This is a difference between the terminal according to the fourth exemplary embodiment and the terminal 100 according to the second exemplary embodiment.

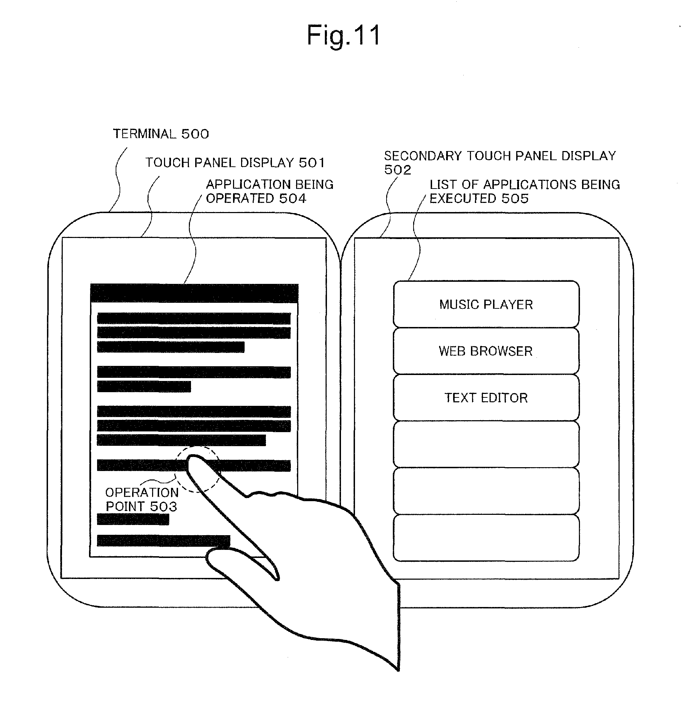

An example of an external view of the terminal according to the exemplary embodiment is shown in Fig. 11. A terminal 500 according to the exemplary embodiment includes a touch panel display 501 and a secondary touch panel display 502. An application 504 that is currently operated by the user among the applications being executed is displayed in the touch panel display 501. On the other hand, a list 505 of the applications being executed is displayed in the secondary touch panel display 502. In the exemplary embodiment, the applications being executed are listed in the list 505 in the order of decreasing priority. Further, an operation point 503 is a position on the touch panel display 501 that is touched by the user.

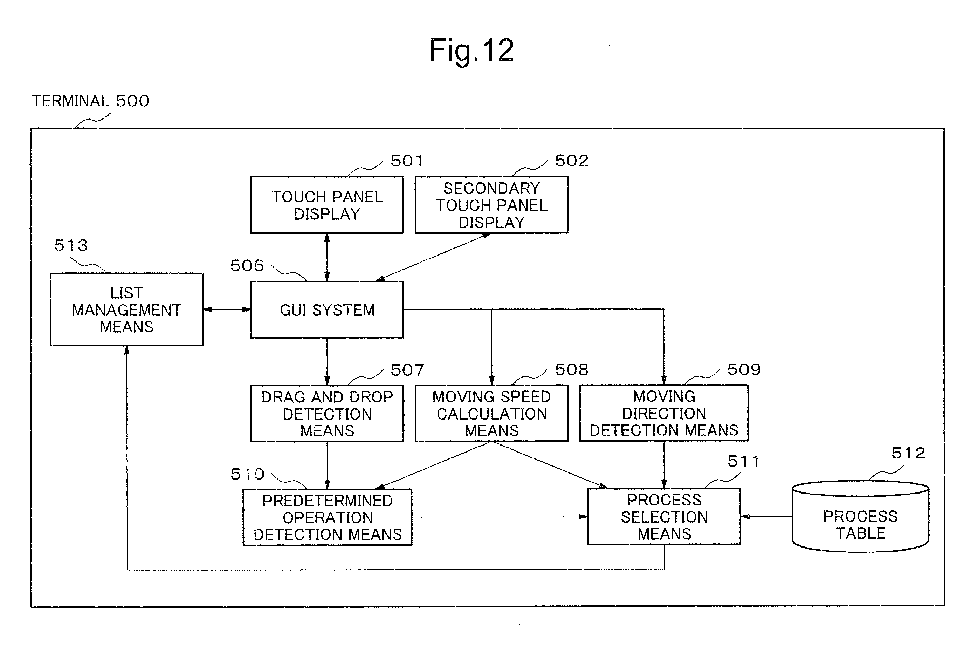

An example of a block configuration diagram of the terminal 500 is shown in Fig. 12. In Fig. 12, the terminal 500 according to the exemplary embodiment includes the touch panel display 501, the secondary touch panel display 502, a GUI system 506, drag and drop detection means 507, moving speed calculation means 508, moving direction detection means 509, predetermined operation detection means 510, process selection means 511, process table 512, and list management means 513. The terminal 500 according to the exemplary embodiment shown in Fig. 12 is obtained by adding the secondary touch panel display 502 and the list management means 513 to the terminal 100 according to the second exemplary embodiment shown in Fig. 4. The list management means 513 updates the display order of the applications 504 being operated in the list 505 based on the process content selected from the process table 512. The now of the operation of the terminal 500 will be described. The flow of the operation of the terminal 500 according to the fourth exemplary embodiment is similar to the flow of the operation from the step S201 to the step S207 of the terminal 100 shown in Fig. 6 that has been described in the second exemplary embodiment. After the process selection means 511 of the terminal 500 according to the exemplary embodiment receives the process selection notification (it is the same as the operation in the step S206 in Fig. 6), the process selection means 511 selects the process content corresponding to the moving speed and the moving direction from the process table 110 (S208 in Fig. 6) and notifies the list management means 513 of the selected process content. The list management means 513 updates the display order of the applications 504 being operated in the list 505 by performing the process content received from the process selection means 511.

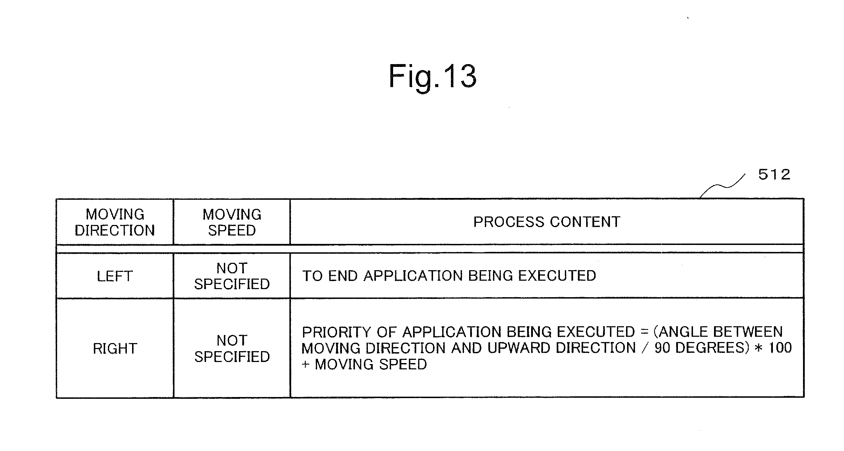

For example, a case in which the list 505 is updated by using the process table 512 shown in Fig. 13 will be described. When the user drags the application 504 being operated in a right direction and drops it, the process selection means 511 selects a formula for calculating the priority of the application being executed as the process content. The process selection means 511 further notifies the list management means 513 of the selected calculation formula. The list management means 513 updates the list 505 shown in Fig. 11 based on the received calculation formula. Namely, the priority of the application 504 being operated is calculated by using the moving speed of the operation point 503 at a time just before the drop that is calculated by the moving speed calculation means 508 and the moving direction of the operation point 503 at a time of the drop that is detected by the moving direction detection means 509. The display order of the applications 504 being operated in the list 505 is changed according to the calculated priority.

When the formula for calculating the priority shown in Fig. 13 is used, the priority becomes high with the increase of the moving speed and the application with a higher priority is arranged in an upper portion of the list 505. On the other hand, the priority becomes low when the operation point moves in a more upward direction and the application with a lower priority is arranged in a lower portion of the list 505. Accordingly, when the user performs an intuitive operation in which the application 504 being operated is dragged in the predetermined direction and at the predetermined speed, the application 504 can be roughly inserted in the desired position in the list 505.

Further, two displays are used in the exemplary embodiment. However it is not limited to this. It is possible to display the application 504 being operated and the list 505 side by side in one display.

The exemplary embodiment of the present invention has been described above. However it is not limited to the above description. Various changes in the configuration of the invention of the present application can be made without departing from the scope of the invention.

This application claims priority based on Japanese Patent Application No. 2010-125946 filed on June 1st, 2010, the disclosure of which is hereby incorporated by reference in its entirety.

### Industrial applicability

As described above, the terminal, the process selection method, the control program, and the recording medium according to the present invention can be applied to a portable telephone set including display means in which an item is displayed and input means which detects the drag-and-drop operation to the item and other various terminals, a process selection method, a control program, and a recording medium.

### Description of symbol

- 10, 100, 300, and 500: terminal
- 20: display means
- 30: input means
- 40: operation determination means
- 50: process selection means
- 60: process table
- 101, 301, and 501: touch panel display
- 102 and 302: item
- 103, 303, and 503: operation point
- 104, 305, and 506: GUI system
- 105, 306, and 507: drag and drop detection means
- 106, 307, and 508: moving speed calculation means
- 107, 308, and 509: moving direction detection means
- 108, 309, and 510: predetermined operation detection means
- 109, 312, and 511: process selection means
- 110, 313, and 512: process table
- 304: determination region
- 310: position correction means
- 311: region determination means
- 502: secondary touch panel display
- 504: application being operated
- 505: list
- 513: list management means

## Claims

1. A terminal comprising:
a process table in which a predetermined process content is registered;
display means in which an item is displayed;
input means which detects a drag-and-drop operation to the item;
operation determination means which determines whether or not a predetermined operation is included in the drag-and-drop operation when the drag-and-drop operation is detected; and
process selection means which selects the predetermined process content from the process table when it is determined that the predetermined operation is included and selects a drag-and-drop process to the item when it is determined that the predetermined operation is not included.

2. The terminal according to claim 1, wherein the predetermined operation is either a drag operation performed at a moving speed greater than a predetermined threshold value or a drop operation performed after the drag operation in a predetermined direction.

3. The terminal according to claim 1 or 2, wherein the predetermined process includes at least one of a process of controlling an execution state of the item and a process of controlling a storage state of the item.

4. The terminal according to any one of claims 1 to 3 further comprising:
moving speed calculation means which calculates a moving speed of the drag and
moving direction detection means which detects a moving direction of the drag;
wherein a plurality of process contents that are associated with the moving speed and the moving direction are registered in the process table, and
wherein the process selection means selects the process content corresponding to the calculated moving speed and the detected moving direction from the process table.

5. The terminal according to any one of claims 1 to 4 further comprising:
region determination means which determines whether or not a drop position is outside a predetermined region;
wherein the process selection means selects the predetermined process content from the process table when it is determined that the predetermined operation is included and it is determined that the drop position is outside the predetermined region.

6. The terminal according to claim 5 further comprising:
position correction means which corrects the drop position according to the state of the drop;
wherein the region determination means determines whether or not the corrected drop position is outside the predetermined region.

7. A process selection method using a terminal which comprises display means and a process table in which a predetermined process content is registered, the process selection method comprising:
displaying an item in the display means;
detecting a drag-and-drop operation to the item;
determining whether or not a predetermined operation is included in the drag-and-drop operation when the drag-and-drop operation is detected; and
selecting a predetermined process content from the process table when it is determined that the predetermined operation is included and selecting a process for moving the item to the drop position when it is determined that the predetermined operation is not included.

8. A control program that can be executed by a computer of a terminal which comprises display means and a process table in which a predetermined process content is registered and the control program which causes the computer to perform
a function to display an item in the display means,
a function to detect a drag-and-drop operation to the item,
a function to determine whether or not a predetermined operation is included in the drag-and-drop operation when the drag-and-drop operation is detected, and
a function to select a predetermined process content from the process table when it is determined that the predetermined operation is included and select a process for moving the item to the drop position when it is determined that the predetermined operation is not included.

9. A computer-readable recording medium storing a control program which causes a computer of a terminal including display means and a process table in which a predetermined process content is registered to perform:
a procedure for displaying an item in the display means,
a procedure for detecting a drag-and-drop operation to the item,
a procedure for determining whether or not a predetermined operation is included in the drag-and-drop operation when the drag-and-drop operation is detected, and
a procedure for selecting a predetermined process content from the process table when it is determined that the predetermined operation is included and selecting a process of moving the item to the drop position when it is determined that the predetermined operation is not included.
